# EUROPEAN PATENT SPECIFICATION

(11) **EP 4 124 489 B1**
(45) Date of publication and mention of the grant of the patent: **11.10.2023**
(21) Application number: 22186995.1
(22) Date of filing: 26.07.2022
(51) Int. Cl.: B60K 15/05, E05B 81/06, E05B 81/64, E05B 83/34, H03K 17/965

(54) **MOTORIZED MODULE FOR VEHICLE LID**
MOTORISIERTES MODUL FÜR FAHRZEUGDECKEL
MODULE MOTORISÉ POUR COUVERCLE DE VÉHICULE

(30) Priority: 30.07.2021 IT 202100020651
(43) Date of publication of application: 01.02.2023
(73) Proprietor: CEBI ITALY S.p.A., 12025 Dronero (CN) (IT)
(72) Inventor: RISTE', Tommaso, 60035 Jesi (AN) (IT); GROSSI, Riccardo, 60027 Osimo (AN) (IT); CIARMATORI, Marco, 60021 Camerano (AN) (IT)
(74) Representative: Cutropia, Gianluigi

(56) References cited:
- EP-A1- 2 628 621
- DE-A1-102019 118 910
- US-A1- 2021 213 828

## Description

The present invention relates to a motorized module for a vehicle lid and specifically for a lid suitable for opening and closing a housing used for fueling or electrically charging of the vehicle.

The modules for vehicle lids according to the prior art comprise a housing and a lid hinged to the housing. A conduit in communication with a fuel tank or an electric charging connector in communication with an electric power supply of the vehicle is disposed in the housing.

A motion actuator moves and rotates the lid around the hinge.

A lock is used to lock the lid in closed position. The lock is moved by a lock actuator.

EP3348432A1, in the name of the same applicant, discloses a closing device (100) of a fuel tank lid for vehicles that includes a roto-translating pin with a T-shaped head that engages the lid.

The lid modules of the prior art do not provide for the integration of other devices into the module.

DE102019118910A1 discloses a tank and/or charging module according to the preamble of claim 1.

The purpose of the present invention is to eliminate the drawbacks of the prior art by providing a module for a vehicle lid that is versatile, capable of integrating devices, practical and user-friendly.

Another purpose is to provide such a module for a vehicle lid that is reliable, efficient, and quick and easy to install.

These purposes are achieved in accordance with the invention with the features of the appended independent claim 1.

Advantageous achievements of the invention appear from the dependent claims.

Further features of the invention will appear clearer from the following detailed description, which refers to a merely illustrative and therefore nonlimiting embodiment, illustrated in the appended drawings, wherein:
Fig. 1 is a perspective front view of a module according to the invention;
Fig. 2 is a perspective rear view of the module of Fig. 1;
Fig. 3 is a perspective view of an integrated actuator-button unit of the module according to the invention;
Fig. 4 is a perspective exploded view of the integrated unit of Fig. 3;
Fig. 5 is a perspective view illustrating an electrical connection of the integrated actuator-button unit according to the invention;
Fig. 6 is an exploded view of the electrical connection of the integrated unit of Fig. 5.
Fig. 7 is a perspective view of a button of the integrated unit of Fig. 3;
Fig. 8 is a perspective exploded view of the button of Fig. 7;
Fig. 9 is an axial cross-sectional view of the button of Fig. 7; and
Fig. 10 is a perspective exploded view illustrating the motion actuator of the lid.

With the aid of the Figures, the module for vehicle lid according to the invention is described, it being generally indicated by reference numeral 100.

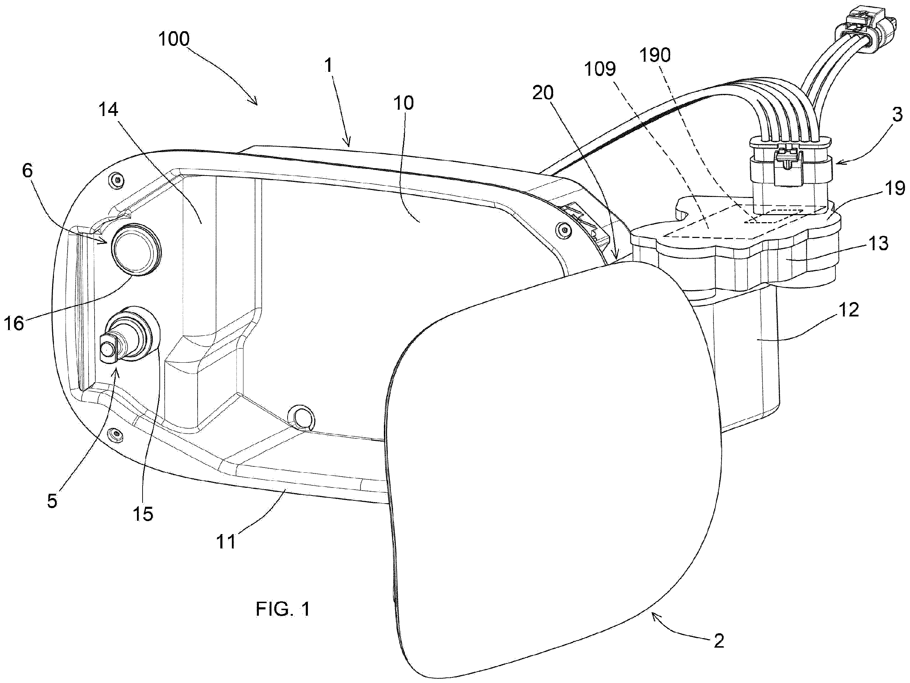

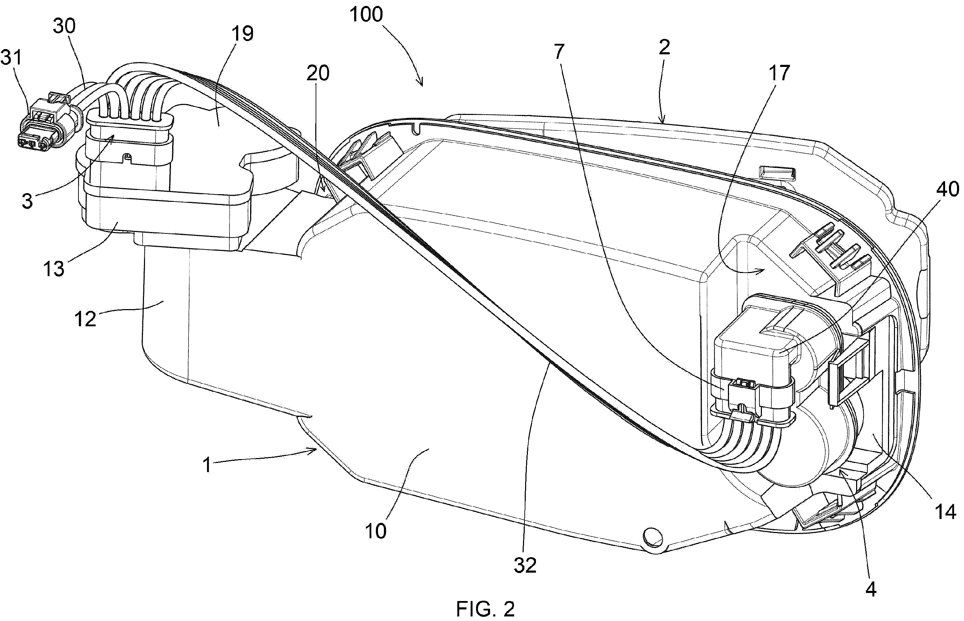

With reference to Figs. 1 and 2, the module (100) includes a housing (1) and a lid (2) hinged to the housing (1) by means of a hinge (20).

The housing (1) is shaped like a parallelepiped box having a bottom wall (10) and a perimetral edge (11) against which the lid (2) is stopped so as to close the housing (1).

A pipe connected to a fuel tank of the vehicle or an electric charging connector electrically connected to a power supply of the vehicle for charging the batteries of the vehicle is engaged in the bottom wall (2).

The hinge (20) is arranged in a housing (12) that protrudes laterally from the housing (1). A first box (13) is mounted on the housing (12) of the hinge. A cover (19) is mounted on the first box (13).

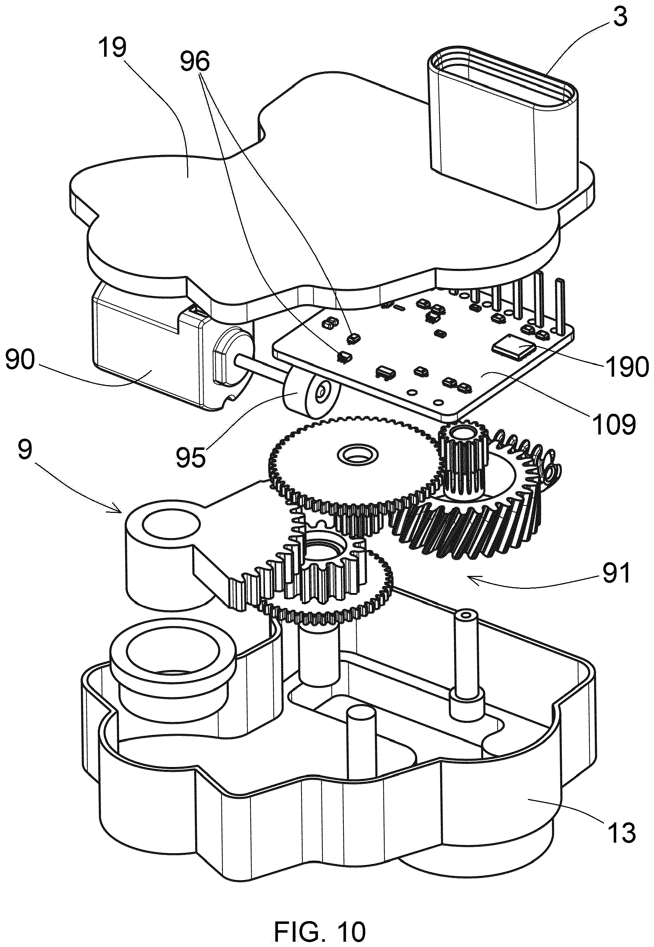

Referring to Fig. 10, a motion actuator (9) is arranged in the first box (13).

The motion actuator (9) is mechanically connected to the lid (2) so that the lid (2) rotates around an axis of the hinge (20). The motion actuator (9) comprises an electric motor (90) and a gear train (91) arranged in the first box (13).

The lid (2) can rotate about the axis of the hinge (20) so as to move from an open position, wherein the housing (1) is accessible for a user, to a closed position, wherein the lid (2) is stopped against the perimetral edge (11) of the housing, closing the housing (1). Therefore the lid (2) can rotate by approximately 90°.

A first PCB (109) is arranged in the first box (13) and a control unit (190) is mounted on said first PCB (109) to control the actuation of the motion actuator (9).

The control unit (190) can also implement an anti-pinching function, which can identify possible obstacles during the opening/closing of the lid (2) and can stop or reverse the motion of the lid (2) by operating the motion actuator (9). For this purpose, two Hall-effect magnetic sensors (96) are mounted on the first PCB (109) and are interfaced with a magnet (95) keyed to the drive shaft of the electric motor (90). If the lid (2) is blocked by the presence of an obstacle, the magnetic sensors (96) will detect the interruption of the rotation of the magnet (95).

The first PCB (109) is connected to a first electrical connector (3) mounted on the cover (19) of the first box (13). The first electrical connector (3) is connected by means of three electrical cables (30) to an electrical output connector (31) suitable for being connected to a control unit of the vehicle for powering the electrical devices and exchanging the electrical signals.

Referring to Fig. 1, the housing (1) has a step-shaped side portion (14) that projects anteriorly from the bottom wall (10), in distal position relative to the hinge (20). The side portion (14) of the housing has a first through hole (15) and a second through hole (16).

With reference to Fig. 2, the side portion (14) of the housing posteriorly defines a recessed seat (17) relative to the bottom wall (10).

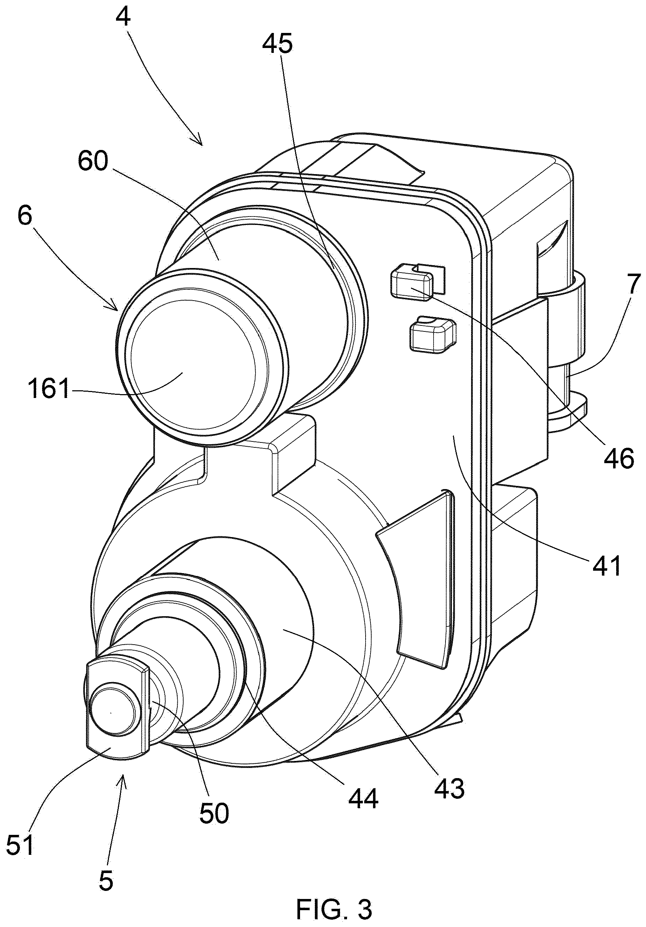

Referring to Fig. 3, the module (100) includes an integrated unit (4) comprising a locking actuator (5) and a button (6).

The integrated unit (4) is mounted at the rear of the housing (1), in the recessed seat (17), so that the locking actuator (5) is inserted into the first through hole (15) of the side portion of the housing and the button (6) is inserted into the second though hole (16) of the side portion of the housing.

The locking actuator (5) acts like a latch bolt of a lock in order to lock the lid (2) in closed position. For such a purpose, the locking actuator (5) includes a roto-translating pin (50) provided with a T-shaped head (51) suitable for being engaged in a housing of the lid (2) to lock the lid in closed position.

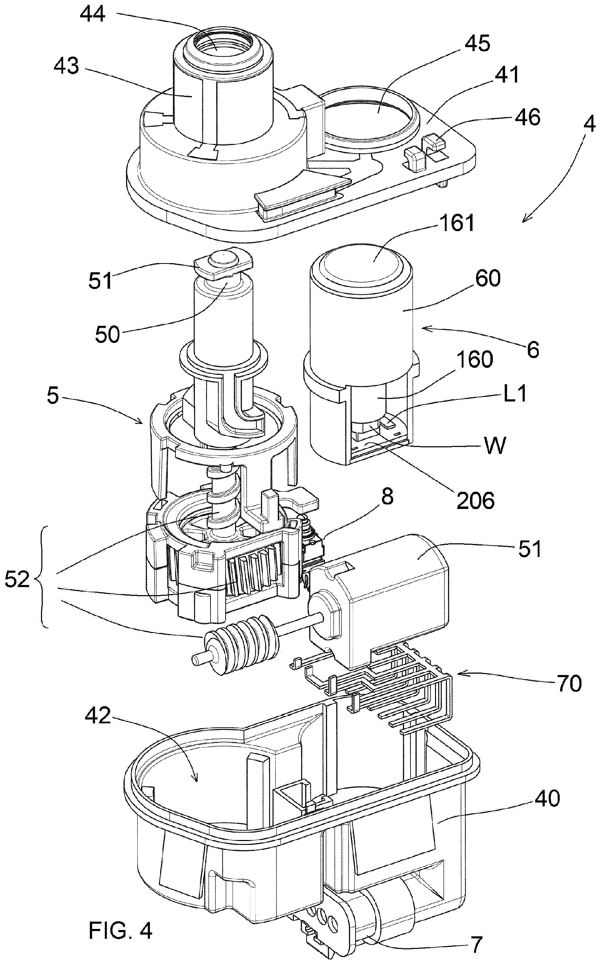

Referring to Fig. 4, an electric motor (51) moves the roto-translating pin (50) by means of a gear train (52). A position sensor (8) detects the open or closed position of the roto-translating pin (50).

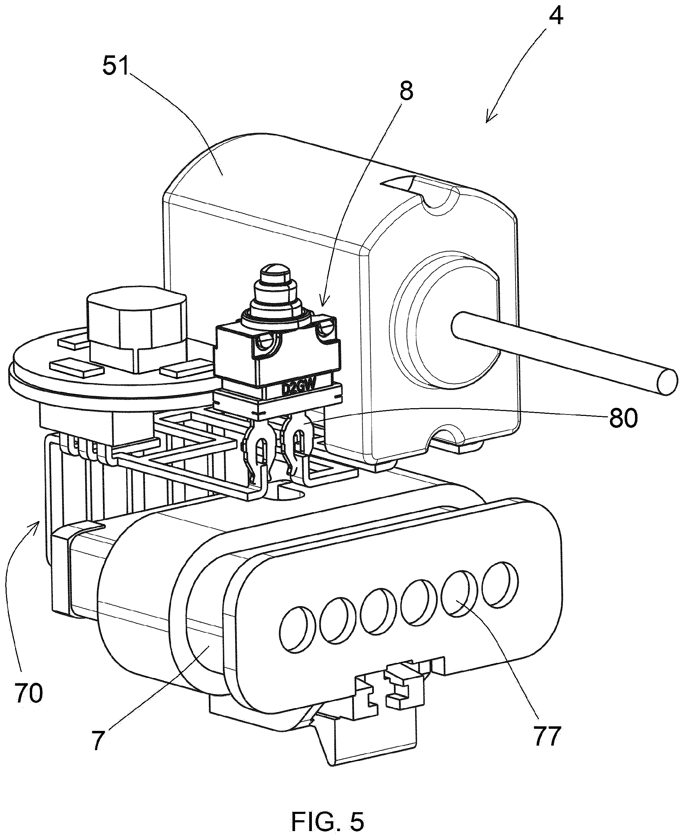

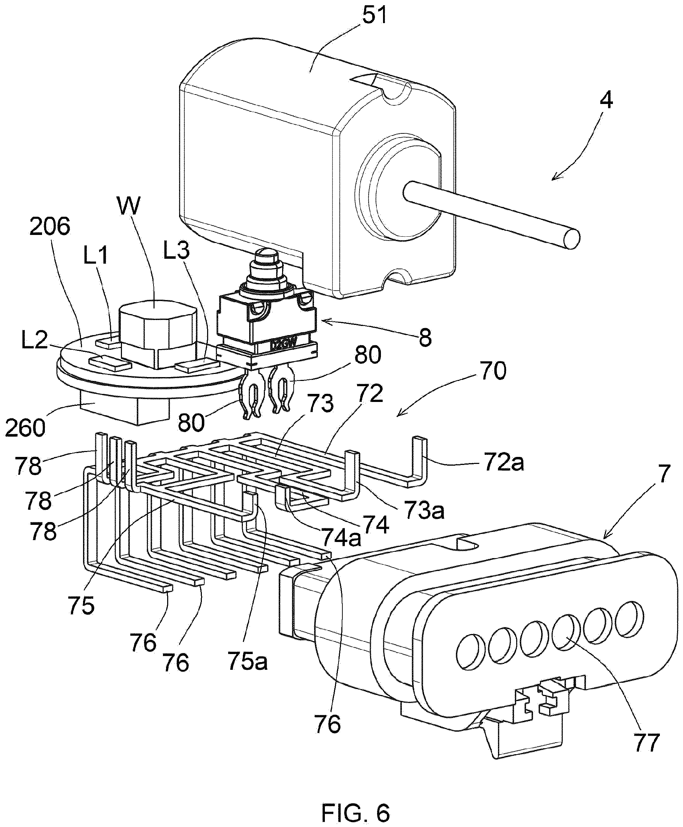

With reference also to Figs. 5 and 6, the electric motor (51) and the position sensor (8) are electrically connected to a second electrical connector (7) by means of a set of electrical contacts (70).

A first and a second wire (72, 73) terminate in respective pins (72a, 73a) connected to the electric motor (51).

A third and a fourth wire (74, 75) terminate in respective pins (74a, 75a) connected to clip contacts (80) of the position sensor (8).

Six wires (76) in the shape of an "L" are connected to the second electrical connector (7). Therefore the second electrical connector (7) has six holes (77) in communication with the electrical contacts (76) to receive electrical wires.

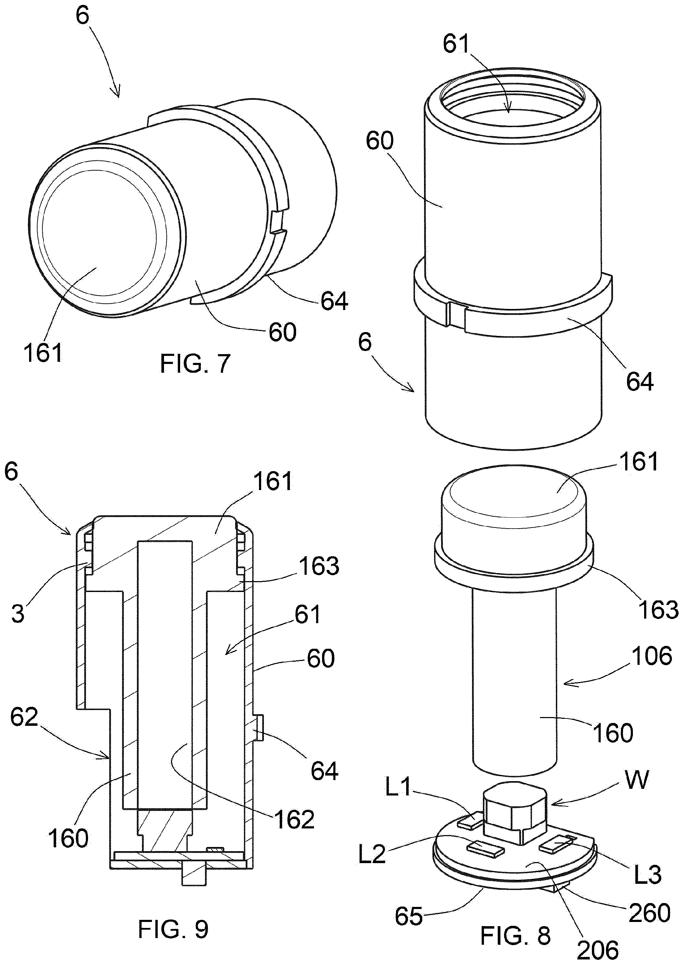

With reference to Figs. 7, 8 and 9, the button (6) has a cylindrical-shaped shell (60) having an axial channel (61) open at the ends and a side opening (62). The side opening (62) makes it possible to reduce the circumferential volume and to prevent the button (6) from interfering with the motor (51).

The shell (60) of the button has an inner collar (63) and an outer collar (64).

A movable body (106) is arranged in the shell (60). The movable body (106) includes a stem (160) of cylindrical shape and a head (161) of discoidal shape with a larger diameter than the stem. The stem (160) is internally hollow and has an axial channel (162) open at the rear.

The head (161) has an outer collar (163) having a diameter equal to the diameter of the axial channel (61) of the shell. In this way, the outer collar (163) of the head is stopped against the inner collar (63) of the shell to prevent an extraction of the movable body from the shell.

A second PCB (206) is mounted on a cover (65) attached to one end of the shell (60) of the button. The second PCB (206) has a discoidal shape with a cut portion in correspondence with the opening (62) of the shell.

A microswitch (W) and three LEDs (L1, L2, L3) of different colors, e.g., white, green, and red, are mounted on the second PCB (206). The microswitch (W) is arranged centrally, whereas the LEDs (L1, L2, L3) are arranged peripherally on the second PCB (206).

Spring-loaded means (not shown in the Figures) hold the head (161) of the moving body in extracted position. If the user presses the head (161) of the movable body, the stem (160) of the movable body translates and interferes with the microswitch (W) that signals the actuation of the button (6).

The second PCB (206) is connected to an electrical connector (260) that protrudes externally from the cover (65) of the button.

With reference to Figs. 5 and 6, the set of electrical contacts (70) has three pins (78) that engage the electrical connector (260) of the second PCB (206).

With reference to Figs. 3 and 4, the integrated unit (4) includes a second box (40) and a cover (41). The second box (40) has a housing (42) suitable for accommodating the locking actuator (5), the electric motor (51), the button (6), the position sensor (8), and the set of electrical contacts (70). The second electrical connector (7) is arranged outside the second box (40).

The cover (41) of the second box includes a tang (43) that protrudes from the cover to accommodate the roto-translating pin (50). The tang (43) has a first hole (44) to let out the roto-translating pin (50). The cover (41) has a second hole (45) to let out the head (161) of the movable body of the button.

Clips (46) are mounted on the cover (41) to attach an emergency cable (not shown in the figures).

Referring to Fig. 2, the second electrical connector (7) is electrically connected to the first electrical connector (3), for example, by means of six electrical cables (32) arranged behind the housing (1).

In this way, the locking actuator (5), the position sensor (8), the button (6) and the LEDs (L1, L2, L3) are electrically connected to the control unit (190) of the first PCB.

In view of the above, when the lid (2) is open, the user can press the button (6) to close the lid (2). When the button (6) is pressed, the microswitch (W) sends a control signal to the control unit (190) of the first PCB, which operates the motion actuator (9) to close the lid.

The position sensor (8) is a microswitch that is actuated when the roto-translating pin (50) is in the open position. The information about the position of the roto-translating pin (50) is sent to the control unit (190).

The control unit (190) receives real-time information from the control unit of the vehicle about the filling condition of the fuel tank or about the charging condition of the battery of the vehicle and switches on the LEDs (L1, L2, L3) accordingly. In particular, the different colors of the LEDs signal different conditions of the battery charging or of the fuel tank filling of the vehicle.

Equivalent variations and modifications may be made to the present embodiment of the invention, which are within the reach of an expert of the field, still falling within the scope of the invention as expressed by the appended claims.

## Claims

1. Motorized module for vehicle lid, said module (100) comprising:
- a housing (1) with a bottom wall (10) wherein a pipe connected to a fuel tank or an electrical charging connector connected to an electrical power supply for charging the batteries of the vehicle is installed,
- a lid (2) hinged to the housing (1) by means of a hinge (20),
- a motion actuator (9) suitably configured so as to rotate the lid (2) around the hinge (20),
a first PCB (109) whereon a control unit (190) is mounted to control an actuation of said motion actuator (9),
- a first box (13) containing said motion actuator (9) and said first PCB (109); said first box (13) being disposed on said housing (1) near said hinge (20),
- a locking actuator (5) suitably configured so as to close said lid (2) in a closed position,
**characterized in that**:
- said module (100) comprises a button (6) suitably configured so as to actuate said motion actuator (9) in order to close said lid (2),
- said locking actuator (5) and said button (6) are arranged in a second box (40) so as to obtain an integrated unit (4) comprising said locking actuator (5) and said button (6).

2. The module (100) of claim 1, wherein said housing (1) has a step-shaped side portion (14) that projects frontally from the bottom wall (10), in a distal position relative to the hinge (20), and
said second box (40) is mounted behind said housing (1), in such a way that said locking actuator (5) and said button (6) are inserted in a first and a second through hole (15, 16) of said side portion (14) of the housing, respectively.

3. The module (100) of claim 1 or 2, comprising:
- a first electrical connector (3) disposed on said first box (13) and electrically connected to the first PCB (109) and to a CPU of the vehicle, and
- a second electrical connector (7) mounted under said second box (40) and electrically connected to the locking actuator (5), to the button (6) and to the first electrical connector (3).

4. The module (100) of claim 3, wherein said button (60) comprises a microswitch (W) electrically connected to said second electrical connector (7).

5. The module (100) of claim 3 or 4, wherein said button (60) comprises at least one LED (L1, L2, L3) that is electrically connected to said second electrical connector (7).

6. The module (100) of claim 5, wherein said button (60) comprises three LEDs (L1, L2, L3) of different colors, respectively.

7. The module (100) of claim 5 or 6 when depending on claim 3, wherein said microswitch (W) and said at least one LED (L1, L2, L3) are mounted on a second PCB (206) having an electrical connector (260) connected to said second electrical connector (7).

8. The module (100) according to any one of the preceding claims, wherein said button (6) comprises:
- a cylindrical shell (60) having an axial channel (61) open at its ends, and
- a movable body (106) slidingly disposed inside the shell (60); said movable body (106) having a stem (160) of cylindrical shape and a head (161) of discoidal shape with higher diameter than the stem,
wherein said head (161) of the button protrudes from said second through hole (16) of the side portion of the housing in order to be operated by a user.

9. The module (100) of claim 8, when depending on claim 7, wherein said second PCB (206) of the button is disposed inside said shell (60) of the button.

10. The module (100) according to any one of claims 3 to 9, wherein said integrated unit (4) further comprises a position sensor (8) disposed in said second box (40) and suitably configured to detect a position of said locking actuator (5), said position sensor (8) being electrically connected to said second electrical connector (7).

11. The module of claim 10, when depending on claim 7, wherein said integrated unit (4) comprises a set of electrical contacts (70) disposed in said second box (40); said set of electrical contacts (70) comprising:
- a first and a second wire (72, 73) ending in respective pins (72a, 73a) connected to an electric motor (51) of said locking actuator (5),
- a third and a fourth wire (74, 75) ending in respective pins (74a, 75a) connected to clip contacts (80) of the position sensor (8),
- six wires (76) in the shape of an "L" connected to the second electrical connector (7),
- three pins (78) that are engaged in the electrical connector (260) of the second PCB (206).

## Patentansprüche

1. Motorisiertes Modul für Fahrzeugklappe, wobei das Modul (100) umfasst:
- ein Gehäuse (1) mit einer Bodenwand (10), in dem ein Rohr, das mit einem Kraftstofftank verbunden ist, oder ein elektrischer Ladeverbinder, der mit einer elektrischen Stromversorgung zum Laden der Batterien des Fahrzeugs verbunden ist, installiert ist,
- eine Klappe (2), die mittels eines Scharniers (20) am Gehäuse (1) gelenkig verbunden ist,
- einen Bewegungsaktor (9), der so konfiguriert ist, dass die Klappe (2) sich um das Scharnier (20) dreht,
eine erste Leiterplatte (109), auf der eine Steuereinheit (190) montiert ist, die eine Betätigung des Bewegungsaktors (9) steuert,
- einen ersten Kasten (13), der den Bewegungsaktor (9) und die erste Leiterplatte (109) enthält; wobei der Kasten (13) auf dem Gehäuse (1) in der Nähe des Scharniers (20) angeordnet ist und
- einen Verriegelungsaktor (5), der so konfiguriert ist, dass er die Klappe (2) in einer geschlossenen Position verschließt,
**dadurch gekennzeichnet, dass**:
- das Modul (100) eine Taste (6) umfasst, die konfiguriert ist, um den Bewegungsaktor (9) zu betätigen, um die Klappe (2) zu schließen,
- der Verriegelungsaktor (5) und die Taste (6) in einem zweiten Kasten (40) angeordnet sind, um eine integrierte Einheit (4) zu erhalten, die den Verriegelungsaktor (5) und die Taste (6) umfasst.

2. Modul (100) nach Anspruch 1, wobei das Gehäuse (1) einen stufenförmigen Seitenabschnitt (14) aufweist, der vorn aus der Bodenwand (10) in einer distalen Position in Bezug auf das Scharnier (20) vorsteht und
der zweite Kasten (40) hinter dem Gehäuse (1) montiert ist, so dass der Verriegelungsaktor (5) und die Taste (6) in ein erstes bzw. in ein zweites Durchgangsloch (15, 16) des Seitenabschnitts (14) des Gehäuses eingesteckt werden.

3. Modul (100) nach Anspruch 1 oder 2, umfassend:
- einen ersten elektrischen Verbinder (3), der auf dem ersten Kasten (13) angeordnet ist und mit der ersten Leiterplatte (109) und einer Steuereinheit des Fahrzeugs elektrisch verbunden ist, und
- einen zweiten elektrischen Verbinder (7), der unter dem zweiten Kasten (40) montiert und mit dem Verriegelungsaktor (5), der Taste (6) und dem ersten elektrischen Verbinder (3) elektrisch verbunden ist.

4. Modul (100) nach Anspruch 3, wobei die Taste (60) einen Mikroschalter (W) umfasst, der mit dem zweiten elektrischen Verbinder (7) elektrisch verbunden ist.

5. Modul (100) nach Anspruch 3 oder 4, wobei die Taste (60) mindestens eine LED (L1, L2, L3) umfasst, die mit dem zweiten elektrischen Verbinder (7) elektrisch verbunden ist.

6. Modul (100) nach Anspruch 5, wobei die Taste (60) drei LEDs (L1, L2, L3), jeweils in verschiedenen Farben, umfasst.

7. Modul (100) nach Anspruch 5 oder 6, wenn abhängig von Anspruch 3, wobei der Mikroschalter (W) und die mindestens eine LED (L1, L2, L3) auf einer zweiten Leiterplatte (206) montiert sind, die einen elektrischen Verbinder (260) aufweist, der mit dem zweiten elektrischen Verbinder (7) verbunden ist.

8. Modul (100) nach einem der vorstehenden Ansprüche, wobei die Taste (6) umfasst:
- eine zylindrische Hülle (60) mit einem axialen Kanal (61), der an seinen Enden offen ist, und
einen beweglichen Körper (106), der verschiebbar in der Hülle (60) angeordnet ist; wobei der bewegliche Körper (106) einen Schaft (160) mit zylindrischer Form und einen Kopf (161) mit scheibenähnlicher Form aufweist, dessen Durchmesser größer als der Schaft ist,
wobei der Kopf (161) der Taste aus dem zweiten Durchgangsloch (16) des Seitenabschnitts des Gehäuses vorsteht, um von einem Benutzer betätigt zu werden.

9. Modul (100) nach Anspruch 8, wenn abhängig von Anspruch 7, wobei die zweite Leiterplatte (206) der Taste innerhalb der Hülle (60) der Taste angeordnet ist.

10. Modul (100) nach einem der Ansprüche 3 bis 9, wobei die integrierte Einheit (4) ferner einen Positionssensor (8) umfasst, der in dem zweiten Kasten (40) angeordnet ist und so konfiguriert ist, dass er eine Position des Verriegelungsaktors (5) erfasst, wobei der Positionssensor (8) mit dem zweiten elektrischen Verbinder (7) elektrisch verbunden ist.

11. Modul nach Anspruch 10, wenn abhängig von Anspruch 7, wobei die integrierte Einheit (4) einen Satz von elektrischen Kontakten (70) umfasst, die in dem zweiten Kasten (40) angeordnet sind; wobei der Satz von elektrischen Kontakten (70) umfasst:
- einen ersten und einen zweiten Leiter (72, 73), die in jeweiligen Stiften (72a, 73a) enden, die mit einem elektrischen Motor (51) des Verriegelungsaktors (5) verbunden sind,
- einen dritten und einen vierten Leiter (74, 75), die in jeweiligen Stiften (74a, 75a) enden, die mit Clip-Kontakten (80) des Positionssensors (8) verbunden sind,
- sechs Leiter (76) in Form eines "L", die mit dem zweiten elektrischen Verbinder (7) verbunden sind,
- drei Stifte (78), die mit dem elektrischen Verbinder (260) der zweiten Leiterplatte (206) in Eingriff stehen.

## Revendications

1. Module de clapet motorisé pour véhicule, le module (100) comprenant :
- un carter (1) ayant une paroi de fond (10) dans lequel il y a un conduit relié à un réservoir de carburant ou à un connecteur électrique de charge branché à un alimentateur électrique pour la charge des batteries du véhicule,
- un clapet (2) articulé au carter (1) moyennant une charnière (20),
- un actionneur de mouvement (9) configuré de manière à faire pivoter le clapet (2) autour de la charnière (20),
- un premier PCB (109) sur lequel est monté une unité de commande (190) qui contrôle un actionnement dudit actionneur de mouvement (9),
- un premier boitier (13) contenant ledit actionneur de mouvement (9) et ledit premier PCB (109) ; ledit premier boitier (13) étant disposé sur ledit carter (1), près de ladite charnière (20), et
- un actionneur de fermeture (5) configuré de manière à fermer ledit clapet (2) sur une position de fermeture,
**caractérisé en ce que**:
- ledit module (100) comprend un poussoir (6) configuré de manière à actionner ledit actionneur de mouvement (9) pour fermer ledit clapet (2),
- ledit actionneur de fermeture (5) et ledit poussoir (6) sont disposés dans un second boitier (40) de manière à obtenir un groupe embarqué (4) comprenant ledit actionneur de fermeture (5) et ledit poussoir (6).

2. Module (100) selon la revendication 1, où ledit carter (1) a une portion latérale (14) en forme de gradin, qui déborde antérieurement de la paroi de fond (10), in position distale par rapport à la charnière (20), et
ledit second boitier (40) étant monté derrière ledit carter (1), de manière que ledit actionneur de fermeture (5) et ledit poussoir (6) entrent respectivement dans un premier et un second trou passant (15, 16) de ladite portion latérale (14) du carter.

3. Module (100) selon la revendication 1 ou 2, comprenant :
- un premier connecteur électrique (3) disposé sur ledit premier boitier (13) et branché électriquement au premier PCB (109) et à une CPU du véhicule, et
- un second connecteur électrique (7) monté au-dessous dudit second boitier (40) et branché électriquement à l'actionneur de fermeture (5), au poussoir (6) et au premier connecteur électrique (3).

4. Module (100) selon la revendication 3, où ledit poussoir (60) comprend un minirupteur (W) branché électriquement au dit second connecteur électrique (7).

5. Module (100) selon la revendication 3 ou 4, où ledit poussoir (60) comprend au moins une DEL (L1, L2, L3) branchée électriquement au dit second connecteur électrique (7).

6. Module (100) selon la revendication 5, où ledit poussoir (60) comprend trois DEL (L1, L2, L3) de couleurs différentes, respectivement.

7. Module (100) selon la revendication 5 ou 6 quand dépendantes de la revendication 3, où ledit minirupteur (W) et ladite au moins une DEL (L1, L2, L3) sont montés sur un second PCB (206) ayant un connecteur électrique (260) branché au dit second connecteur électrique (7).

8. Module (100) selon l'une quelconque des revendications précédentes, où ledit poussoir (6) comprend :
- une coque (60) de forme cylindrique ayant un canal axial (61) ouvert aux extrémités, et
- un corps mobile (106) disposé coulissant dans la coque (60) ; ledit corps mobile (106) ayant une tige (160) de forme cylindrique et une tête (161) de forme discoïdale dont le diamètre est majeur de celui de la tige,
où ladite tête (161) du poussoir déborde dudit second trou (16) de la portion latérale du carter pour être activée par un utilisateur.

9. Module (100) selon la revendication 8, quand dépendante de la revendication 7, où ledit second PCB (206) du poussoir est disposé dans ladite coque (60) du poussoir.

10. Module (100) selon l'une quelconque des revendications de 3 à 9, où ledit groupe embarqué (4) comprend également un capteur de position (8), disposé dans ledit second boitier (40), configuré de manière à détecter une position dudit actionneur de fermeture (5), ledit capteur de position (8) étant électriquement branché au dit second connecteur électrique (7).

11. Module selon la revendication 10, quand dépendante de la revendication 7, où ledit module embarqué (4) comprend un groupe de contacts électriques (70) disposé dans ledit second boitier (40) ; ledit groupe de contacts électriques (70) comprenant :
- un premier et un deuxième conducteurs (72, 73) terminant avec des respectives broches (72a, 73a) branchées à un moteur électrique (51) dudit actionneur de fermeture (5),
- un troisième et un quatrième conducteurs (74, 75) terminant avec des respectives broches (74a, 75a) branchées avec des contacts à clip (80) du capteur de position (8),
- six conducteurs (76) en forme de « L » branchés au second connecteur électrique (7),
- trois broches (78) qui s'engagent dans le connecteur électrique (260) du second PCB (206).
